(19) Europäisches Patentamt / European Patent Office / Office européen des brevets

(11) **EP 3 089 106 B1**

(12) **EUROPÄISCHE PATENTSCHRIFT**

(45) Veröffentlichungstag und Bekanntmachung des Hinweises auf die Patenterteilung:
**01.04.2020 Patentblatt 2020/14**

(51) Int Cl.:
***G06T 5/50*** *(2006.01)*

(21) Anmeldenummer: **16167281.1**

(22) Anmeldetag: **27.04.2016**

(54) **VERFAHREN ZUR REFLEXIONSKORREKTUR VON ABBILDUNGEN UND DIESBEZÜGLICHE VORRICHTUNGEN**

METHOD FOR REFLECTION ADJUSTMENT OF IMAGES AND RELATED APPARATUS

PROCEDE DE CORRECTION DE REFLEXION D'IMAGES ET DISPOSITIFS CORRESPONDANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2015 DE 102015208080**

(43) Veröffentlichungstag der Anmeldung:
**02.11.2016 Patentblatt 2016/44**

(73) Patentinhaber: **Carl Zeiss Microscopy GmbH**
**07745 Jena (DE)**

(72) Erfinder:
• **STOPPE, Lars**
  **07743 Jena (DE)**
• **MILDE, Thomas**
  **07616 Nausnitz (DE)**
• **WINTEROT, Johannes**
  **07745 Jena (DE)**

(74) Vertreter: **Müller, Silke**
  **Carl Zeiss AG**
  **Patentabteilung**
  **Carl-Zeiss-Promenade 10**
  **07745 Jena (DE)**

(56) Entgegenhaltungen:
**US-A- 6 088 612     US-A1- 2008 084 499**

• **GUPTA VIPIN ET AL: "Dynamic illumination based system to remove the glare and improve the quality of medical images", THE EFFECT OF APPLIED COMPRESSIVE LOADING ON TISSUE-ENGINEERED CARTILAGE CONSTRUCTS CULTURED WITH TGF-BETA3, IEEE, 3. Juli 2013 (2013-07-03), Seiten 3020-3023, XP032489824, ISSN: 1557-170X, DOI: 10.1109/EMBC.2013.6610176 [gefunden am 2013-09-25]**

**Beschreibung**

Die vorliegende Erfindung betrifft ein Verfahren zur Reflexionskorrektur einer Abbildung eines Objektes, vorzugsweise einer digitalen mikroskopischen Abbildung und diesbezügliche Vorrichtungen.

Bei einer Bildaufnahme mit einem optischen System mit Beleuchtung kann es zu unerwünschten Reflexen kommen, welche auf der Wechselwirkung zwischen Beleuchtung, Objekt und System beruhen, und welche die Bildaufnahme beziehungsweise den Bildeindruck verschlechtern. Wichtige Details des Bildes können durch solche Reflexe verlorengehen. Diese Reflexe können zwei verschiedene Gründe haben: Zum einen eine Bildreflexion, welche durch eine Mehrfachreflexion innerhalb des optischen Systems auftritt (Systemreflexe), und zum Anderen eine Bildreflexion durch hohe Reflektivität des zu untersuchenden Objekts in spezielle Richtungen, insbesondere bei Auflicht-Beleuchtung.

Die Korrektur der System-Reflexe erfolgt aktuell in der Regel mittels spezieller Anti-Reflex-Beschichtungen auf den kritischen optischen Flächen innerhalb des Systems. Des Weiteren werden spezielle Optik-Designs mit erhöhter Komplexität verbaut, um die System-Reflexe zu vermindern. Ferner kann auch ein Mattieren (schwarz) aller Teile die nicht für die Abbildung relevant sind, erfolgen. Des Weiteren können auch polarisationsoptische Antireflexeinrichtungen verwendet werden. Alle diese Maßnahmen erfordern jedoch einen erhöhten Aufwand bei der Produktion und können somit kostenintensiv sein.

Häufig wird versucht, auftretende Reflexe digital mittels einer Bildnachbearbeitung zu korrigieren, indem beispielsweise ein Anstieg eines Helligkeitsunterschiedes in einem Bildteil des abgebildeten Objektes kompensiert wird oder indem mittels mathematischer Modelle die Reflex-Beschaffenheit des Objektes modelliert wird und versucht wird, die dadurch erhaltenen Reflexionen aus dem Bild herauszurechnen. Diese Nachbearbeitungsverfahren haben den Nachteil, dass sie in dem Bild auftretende Reflexionen nur in speziellen Fällen weitgehend entfernen können. Ein weiterer Nachteil kann dabei sein, dass das abgebildete Objekt dabei verfälscht werden kann. Außerdem sind nachträgliche Bildbearbeitungsverfahren zeit- und rechenintensiv.

In der US 6,088,612 A ist ein Kolposkop beschrieben, bei dem eine Reflexkorrektur durch eine Beleuchtung aus zwei unterschiedlichen Richtungen und Bildaufnahme desselben Sichtfeldes sowie eine entsprechende Verrechnung der Teilbilder erfolgt. Bei der Bildverarbeitung werden zunächst die Bereiche mit Reflexen durch Eingabe eines Schwellenwertes identifiziert und in einem PC durch jeweils reflexfreie Bereiche des jeweils anderen Bildes ersetzt. Dies ist einerseits ein rechenintensiver Vorgang und andererseits werden an den Rändern der Bereiche meist Artefakte entstehen. Insbesondere bei mikroskopischen Bildern können so wichtige Details verloren gehen.

Eine ähnliche Vorrichtung ist in "Dynamic Illuminationnbased System to Remove the Glare and Improve the Quality of Medical Images", Gupta Vipin et al, 35th annual International Conference of the IEEE EMBS beschrieben. Das Verfahren basiert auf einer dynamischen Umschaltung zwischen verschiedenen LED-Schaltkombinationen eines LED-Beleuchtungsringes und der Aufnahme jeweils eines Videoframes. Auch hier ist eine Erkennung der Reflex-Regionen und die Erstellung einer Maske erforderlich, um eine Reflexkorrektur vornehmen zu können. Die US 2008/0084499 A1 beschreibt ein Eye-Tracking System eines Kraftfahrzeuges, bei dem in einem Videosystem zwei Bilder aus zwei gegenüberliegenden Beleuchtungsrichtungen synchron zur Videoaufnahmesequenz aufgenommen werden und durch Bildung eines Minimums zwischen beiden Bildern Reflexe herausgerechnet werden.

Daher wäre es wünschenswert, eine Möglichkeit bereitzustellen, welche es erlaubt, in einem optischen Gerät, beispielsweise in einem Digitalmikroskop durch die Beleuchtung des Objektes auftretende Reflexe in der mikroskopischen Aufnahme schnell und zuverlässiger zu entfernen.

Es ist Ziel der Erfindung, eine Möglichkeit vorzuschlagen, welche zumindest einen Teil der im Stand der Technik bekannten Nachteile vermeidet oder zumindest vermindert.

Die Aufgabe wird erfindungsgemäß gelöst mittels eines Verfahrens gemäß dem Hauptanspruch sowie mittels Vorrichtungen gemäß der nebengeordneten Ansprüche.

Der Gegenstand des Hauptanspruches betrifft dabei ein Reflexionskorrekturverfahren zur Korrektur von Abbildungen, vorzugsweise von mikroskopischen Abbildungen.

Die mikroskopischen Abbildungen können durch verschiedene bekannte mikroskopische Verfahren gewonnen werden. Besonders vorteilhaft anwendbar ist das erfindungsgemäße Verfahren in der digitalen Mikroskopie, da hier ohnehin verschiedene Bildverarbeitungstechniken und -algorithmen zur Anwendung kommen.

Dabei weist das Reflexionskorrekturverfahren die in Anspruch 1 definierten Schritte auf.

Die Verfahrensschritte können automatisiert ausgeführt werden. Vorteilhafterweise werden die Verfahrensschritte im "Live"-Modus des Mikroskopes in so schneller Folge abgearbeitet, dass der Nutzer quasi das Live-Bild betrachtet, ohne auf die Korrektur-Schritte warten zu müssen. Die Aufnahme der Illuminationsmusterbilder und Verarbeitung in der Hardware (optical engine)des Mikroskopes zum reflexionskorriegierten Bild erfolgt also in einer wesentlich höheren Frequenz, als die die Wiedergabe des "Live"-Bildes.

Ein Illuminationsmuster im Sinne der Erfindung kann dabei die gezielte Aktivierung einer oder mehrerer Illuminationsquellen sein, zur Beleuchtung des Objektes, um ein entsprechendes Illuminationsmusterbild des Objektes zu erstellen. Beispielsweise kann ein Illuminationsmuster die Beleuchtung des Objektes mittels einer ersten Illuminationsquelle sein, wohingegen ein zweites Illuminationsmuster das Objekt mittels einer oder mehrerer anderen Illuminationsquellen beleuchtet. Mit einem LED-Ringlicht, wie es in der Mikroskopie häufig zur Dunkelfeld-Auflichtbeleuchtung verwendet wird, können solche Illuminationsmuster einfach durch gezielte Ansteuerung einzelner oder mehrerer LED's des Ringlichtes erzeugt werden. Unter Illuminationsmuster wird also eine definierte Anordnung bzw. Schaltung verschiedener Illuminationsquellen verstanden. Das Illuminationsmuster selbst kann beispielsweise durch eine Matrix an Illuminationsquellen gebildet werden, wobei je Illuminationsmuster verschiedene der Illuminationsquellen der Matrix angeschaltet werden. Dabei kann je nach Aufbau der Matrix und erlaubter Anzahl gleichzeitig angeschalteter Illuminationsquellen eine kombinatorisch zu ermittelnde Anzahl voneinander verschiedener Illuminationsmuster erzeugt werden.

Ein Illuminationsmusterbild im Sinne der Erfindung ist dabei eine optische digitale Aufnahme eines Objektes (Bild), wobei das Objekt mittels eines Illuminationsmusters beleuchtet wurde.

Ein Teilreflexionsbild im Sinne der Erfindung ist dabei ein Bild, welches entsteht, indem zwei geeignete Illuminationsmusterbilder miteinander kombiniert werden. In der Regel sind geeignete Illuminationsmuster solche, die geometrisch "benachbart" sind. Die Wahl wird gemäß dieser Nachbarschaftsdefinition getroffen. Die Kombination der Illuminationsmusterbilder erfolgt derart, dass die Reflexionen, welche in beiden Illuminationsmusterbildern vorhanden sind, bestehen bleiben, wohingegen diejenigen Bildanteile, die keine Reflexionen aufweisen, einander aufheben. Man bildet dazu den Betrag der Differenz der Einzelbilder. Reflexe werden aufgrund der Oberflächeneigenschaften wandern, wohingegen das eigentliche Objekt unverändert bleibt.

Ein reflexionskorrigiertes Bild im Sinne der Erfindung ist dabei ein Bild, welches um die bei der Aufnahme der Illuminationsmusterbilder aufgetretenen Reflexionen korrigiert wurde.

Ein Berechnen eines reflexionskorrigierten Bildes des Objektes mittels Kombination mindestens eines Illuminationsmusterbildes und mindestens eines Teilreflexionsbildes im Sinne der Erfindung kann dabei ein Vorgang sein, welcher die Reflexionen, welche in den betreffenden Illuminationsmusterbildern durch die Beleuchtung mittels der entsprechenden Illuminationsmuster entstehen, korrigiert, indem er entsprechende Teilreflexionsbilder geeignet mit den entsprechenden Illuminationsmusterbildern kombiniert. Dabei müssen die berechneten Teilreflexionen richtig in das reflexkorrigierte Gesamtbild gerechnet werden - d.h. die Berechnungsformel ist abhängig von der Berechnung der Teilreflexionsbilder. Beispielsweise kann dies erfolgen, indem die entsprechenden Illuminationsmusterbilder aufaddiert werden und von ihnen die aufaddierten entsprechenden Teilreflexionsbilder subtrahiert werden. In Abwandlungen des erfindungsgemäßen Verfahrens könnte man auch nur Teile addieren bzw. man kann zusätzliche Bildverarbeitungsschritte dazwischenschalten, falls gewünscht und erforderlich.

Eine aktive Illuminationsquelle im Sinne der Erfindung kann dabei eine Lichtquelle sein, welche eingeschaltet ist, um das Objekt zu beleuchten, z.B. eine einzelne oder eine Gruppe von LED's in einem LED-Ringlicht.

Durch die Anordnung mehrerer solcher Illuminationsquellen um das Objekt und deren gezielte Ansteuerung, kann somit eine winkelselektive Beleuchtung des Objektes erreicht werden.

Durch die erfindungsgemäße Lehre wird der Vorteil erreicht, dass für das Objekt eine gut ausgeleuchtete Bildaufnahme generiert werden kann, bei der durch die Beleuchtung auftretende Reflexionen weitestgehend bis vollständig eliminiert werden können.

Dies kann kostengünstig erreicht werden, wobei das Objekt weitestgehend bis vollständig unverfälscht dargestellt werden kann.

Insbesondere bei vergrößerten Aufnahmen wie sie beim Mikroskopieren entstehen, können dadurch gut ausgeleuchtete und weitgehend reflexionsfreie Objektbilder generiert werden.

Der Gegenstand eines nebengeordneten Anspruches betrifft eine reflexionskorrigierende Vorrichtung zur reflexionskorrigierten Objektabbildung, vorzugsweise zum reflexionskorrigierten Mikroskopieren, besonders bevorzugt zum reflexionskorrigierten Lichtmikroskopieren.

Dabei weist die reflexionskorrigierende Vorrichtung auf: Eine Bildaufnahmevorrichtung und eine Reflexionskorrekturvorrichtung. Dabei ist die Bildaufnahmevorrichtung dazu eingerichtet, ein Objektbild zu erfassen und an die Reflexionskorrekturvorrichtung zu übermitteln. Dabei ist die reflexionskorrigierende Vorrichtung dazu eingerichtet, ein erfindungsgemäßes Reflexionskorrekturverfahren vorzugsweise mit Mitteln der Hardware- oder Software-Bildverarbeitung auszuführen.

Eine Bildaufnahmevorrichtung im Sinne der Erfindung kann dabei eine Vorrichtung sein, welche geeignet ist, ein Objekt abzutasten und optisch darzustellen. Insbesondere kann eine Bildaufnahmevorrichtung ein Mikroskop sein, besonders bevorzugt ein Lichtmikroskop mit digitaler Bilderfassung. Ferner kann die Bildaufnahmevorrichtung eine Mehrzahl an Illuminationsquellen zur winkelselektiven Beleuchtung des zu aufzunehmenden Objektes aufweisen.

Eine Reflexionskorrekturvorrichtung im Sinne der Erfindung kann dabei eine Vorrichtung aufweisen, welche dazu eingerichtet ist, Reflexionen, welche durch die Beleuchtung des Objektes bei der Bildaufnahme entstehen, zu korrigieren. Die Reflexionskorrekturvorrichtung kann hierzu eine CPU und eine zugehörige Architektur aufweisen. Insbesondere kann die Reflexionskorrekturvorrichtung ein entsprechend eingerichteter Computer oder eine Bildverarbeitungseinheit eines digitalen Mikroskops sein.

Durch die erfindungsgemäße Lehre wird der Vorteil erreicht, dass kostengünstig eine Vorrichtung bereitgestellt werden kann, welche es ermöglicht, ein Objekt winkelselektiv zu beleuchten, dabei aufzunehmen und störende, durch das Beleuchten entstehende, Reflexionen weitestgehend bis vollständig zu eliminieren.

Der Gegenstand eines weiteren nebengeordneten Anspruches betrifft ein Computerprogrammprodukt für eine erfindungsgemäße reflexionskorrigierende Vorrichtung, welche nach einem erfindungsgemäßen Reflexionskorrekturverfahren betreibbar ist. Durch die erfindungsgemäße Lehre wird der Vorteil erreicht, dass damit das Reflexionskorrekturverfahren automatisiert betreibbar ist und auf einfache und kostengünstige Weise für entsprechende verschiedene erfindungsgemäße Vorrichtungen bereitgestellt werden kann.

Der Gegenstand eines weiteren nebengeordneten Anspruches betrifft dabei einen Datenträger aufweisend ein erfindungsgemäßes Computerprogrammprodukt.

Durch die erfindungsgemäße Lehre wird der Vorteil erreicht, dass damit das Reflexionskorrekturverfahren automatisiert betreibbar ist und auf einfache und kostengünstige Weise, für entsprechende, verschiedene erfindungsgemäße Vorrichtungen bereitgestellt werden kann und dabei einfach transportiert werden kann, um das Verfahren direkt auf die entsprechende erfindungsgemäße Vorrichtung, am Ort der Vorrichtung portieren zu können.

Bevor nachfolgend Ausgestaltungen der Erfindung eingehender beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit in der Beschreibung und den Ansprüchen der Singular verwendet wird ist dabei jeweils der Plural mitumfasst, soweit der Kontext dies nicht explizit ausschließt. Etwaige Verfahrensschritte können, soweit der Kontext dies nicht explizit ausschließt, automatisiert ausgeführt werden.

Nachfolgend werden weitere exemplarische Ausgestaltungen des erfindungsgemäßen Verfahrens erläutert.

Entsprechend einer ersten exemplarischen Ausgestaltung weist das Reflexionskorrekturverfahren ferner auf, dass die aktiven Illuminationsquellen aller Illuminationsmuster eine geometrische Grundstruktur um das Objekt bilden. Und die Illuminationsmuster weisen ein Muster auf, wobei das Muster auswählbar aus einer Mustergruppe ist.

Dabei weist die Mustergruppe auf:

- Eine einzige aktive Illuminationsquelle;
- Mehrere aktive Illuminationsquellen in Form eines Achtels der geometrischen Grundstruktur;
- Mehrere aktive Illuminationsquellen in Form eines Viertels der geometrischen Grundstruktur;
- Mehrere aktive Illuminationsquellen in Form einer Hälfte der geometrischen Grundstruktur;

Und ferner jede zweite Illuminationsquelle der geometrischen Grundstruktur als aktive Illuminationsquelle.

Eine geometrische Grundstruktur im Sinne der Erfindung kann dabei eine Anordnung der Illuminationsquellen sein, um eine entsprechend gute Ausleuchtung des aufzunehmenden Objektes zu erreichen. Vorzugsweise kann die geometrische Grundstruktur eine Kreisstruktur oder eine kreisähnliche Struktur sein, jedoch auch Viereck oder Vieleck sein. Verschiedene Ringbeleuchtungen können hier zum Einsatz kommen.

Diese Ausgestaltung weist den Vorteil auf, dass Illuminationsmuster gewählt werden können, welche eine optimale Ausleuchtung des Objektes ermöglichen können, und bei denen darauf geachtet werden kann, dass möglichst leicht zu korrigierende Reflexe entstehen.

Entsprechend einer weiteren exemplarischen Ausgestaltung weist das Reflexionskorrekturverfahren ferner auf:

- Bilden einer geeigneten ersten Illuminationsgruppe und einer geeigneten weiteren Illuminationsgruppe;
- Zuordnen eines jeden Illuminationsmusterbildes zu der ersten Illuminationsgruppe oder zu der weiteren Illuminationsgruppe

Dabei gehören die jeweils zwei Illuminationsmusterbilder zur Bestimmung des entsprechenden Teilreflexionsbildes verschiedenen Illuminationsgruppen an.

Eine Illuminationsgruppe im Sinne der Erfindung kann dabei eine Gruppe sein, welche einen Teil der Illuminationsmuster aufnehmen kann. Somit können die Illuminationsmuster in Gruppen sortiert werden, um entsprechende Teilreflexionsbilder erstellen zu können.

Diese Ausgestaltung weist den Vorteil auf, dass auf effektive Weise Teilreflexionsbilder erstellt werden können, derart, dass Reflexionen, welche durch die winkelselektive Beleuchtungen entstehen, hervorgehoben werden können. Entsprechend einer weiteren exemplarischen Ausgestaltung weist das Reflexionskorrekturverfahren ferner auf, dass die Anzahl an Teilreflexionsbildern der Anzahl an Illuminationsmustern der ersten Illuminationsgruppe und/oder der Anzahl an Illuminationsmustern der weiteren Illuminationsgruppe entsprechen.

Diese Ausgestaltung weist den Vorteil auf, dass nur so viele Teilreflexionsbilder generiert werden müssen, wie notwendig sind, um die auftretenden Reflexionen durch die winkelselektiven Beleuchtungen beziehungsweise durch die Illuminationsmuster hervorzuheben, um diese Reflexionen danach aus dem Objektbild oder den Objektbildern herauszufiltern.

Entsprechend einer weiteren exemplarischen Ausgestaltung weist das Reflexionskorrekturverfahren ferner auf, dass jedes Teilreflexionsbild einem Differenzbild der entsprechenden zwei Illuminationsmusterbilder entspricht.

Ein Differenzbild im Sinne der Erfindung kann dabei ein Bild sein, welches entsteht, wenn beispielsweise pixelweise zwei Bilder voneinander subtrahiert werden. Pixel welche identisch sind werden dabei eliminiert. Auf diese Weise bleiben bei einem statischen Objekt lediglich diejenigen Bildanteile übrig, welche durch eine Winkelselektivität der Beleuchtung entstanden sind, somit also die Reflexe für das entsprechende Illuminationsmuster, beziehungsweise zweier zueinander ähnlicher Illuminationsmuster.

Diese Ausgestaltung weist den Vorteil auf, dass auf einfache Weise Bilder generiert werden können, welche weitestgehend lediglich die Reflexe aufweisen, um sie danach aus dem entsprechenden Objektbild filtern zu können.

Entsprechend einer weiteren exemplarischen Ausgestaltung weist das Reflexionskorrekturverfahren ferner auf, dass das Differenzbild ein Betragsdifferenzbild aufweist, vorzugsweise ein gewichtetes Betragsdifferenzbild aufweist.

Ein Betragsdifferenzbild im Sinne der Erfindung kann dabei ein Bild sein, bei welchem es beim Differenzbilden der Pixel keine Rolle spielt, welches der beiden Bilder von dem anderen subtrahiert wird, da beim Subtrahieren der Betrag gebildet wird, das jeweilige Ergebnis somit stets einen positiven Wert aufweist.

Ein gewichtetes Betragsdifferenzbild im Sinne der Erfindung kann dabei ein Betragsbild sein, welches normiert wird, beispielsweise auf eine bestimmte Helligkeit.

Diese Ausgestaltung weist den Vorteil auf, dass das Verfahren flexibilisiert werden kann, da beim Erzeugen eines Teilreflexionsbildes nicht vorher ausgewählt werden muss, welches der beiden entsprechenden Illuminationsmusterbilder von dem anderen subtrahiert werden muss.

Entsprechend einer weiteren exemplarischen Ausgestaltung weist das Reflexionskorrekturverfahren ferner ein Bestimmen eines geeigneten Nachbarschaftsverhältnisses der Illuminationsmusterbilder zueinander auf. Dabei erfolgt das Bilden der ersten Illuminationsgruppe und der weiteren Illuminationsgruppe mittels des Nachbarschaftsverhältnisses. Das Zuordnen des jeweiligen Illuminationsmusterbildes zu der ersten Illuminationsgruppe oder zu der weiteren Illuminationsgruppe erfolgt aufgrund des Nachbarschaftsverhältnisses.

Ein Nachbarschaftsverhältnis der Illuminationsmusterbilder zueinander im Sinne der Erfindung kann dabei eine ähnliche Winkelselektivität der Beleuchtung durch die beiden entsprechenden Illuminationsmuster als Grundlage haben. Die Nachbarschaft kann dabei eine Nähe aufgrund einer Bezugsachse sein. Die Nachbarschaft kann auch durch eine direkt Nähe zweier Illuminationsquellen gegeben sein, welche in jeweils einem anderen Illuminationsmuster verwendet werden.

Diese Ausgestaltung weist den Vorteil auf, dass zur Bildung eines Teilreflexionsbildes Illuminationsmusterbilder herangezogen werden können, bei denen die Reflexionen durch eine Nachbarschaft der Illuminationsmusterbilder eine ähnliche Winkelselektivität aufweisen und somit weitgehend ähnliche Reflexionen in den zugehörigen Illuminationsmusterbildern generieren.

Entsprechend einer weiteren exemplarischen Ausgestaltung weist das Reflexionskorrekturverfahren ferner auf, dass das Bestimmen des Nachbarschaftsverhältnisses in Abhängigkeit des ausgewählten Musters erfolgt.

Diese Ausgestaltung weist den Vorteil auf, dass zur Bildung eines Teilreflexionsbildes Illuminationsmusterbilder herangezogen werden können, bei denen die Reflexionen durch eine Nachbarschaft der Illuminationsmuster eine ähnliche Winkelselektivität aufweisen und somit weitgehend ähnliche Reflexionen in den zugehörigen Illuminationsmusterbildern generieren.

Entsprechend einer weiteren exemplarischen Ausgestaltung weist das Reflexionskorrekturverfahren ferner ein Ermitteln eines Gesamtreflexionsbildes aus zumindest einem Teil der Teilreflexionsbilder auf.

Dies kann vorzugsweise mittels aller Teilreflexionsbilder erfolgen.

Ein Gesamtreflexionsbild im Sinne der Erfindung kann dabei ein Bild sein, bei welchem alle entsprechenden Teilreflexionsbilder zu einem gesamten Bild zusammengefügt werden. Somit werden in einem Bild alle Reflexionen, welche durch die winkelselektiven Aufnahmen entstanden sind zusammengefügt, so dass ein Bild entsteht, in dem nahezu lediglich alle Reflexe des Objektes enthalten sind.

Diese Ausgestaltung weist den Vorteil auf, dass dadurch auf eine und effiziente Weise die Reflexe aus dem Objekt gefiltert werden können.

Entsprechend einer weiteren exemplarischen Ausgestaltung weist das Reflexionskorrekturverfahren ferner auf, dass das Ermitteln des Gesamtreflexionsbildes mittels geeigneter Überlagerung der entsprechenden Teilreflexionsbilder miteinander erfolgt. Besonders bevorzugt erfolgt die geeignete Überlagerung mittels Summation der entsprechenden Teilreflexionsbilder.

Diese Ausgestaltung weist den Vorteil auf, dass dadurch auf eine und effiziente Weise alle Reflexe des Objektes in einem Bild dargestellt werden können.

Entsprechend einer weiteren exemplarischen Ausgestaltung weist für das Reflexionskorrekturverfahren das Konstruieren des reflexionskorrigierten Bildes des Objektes auf:

- Aufsummieren mindestens eines Teiles aller Illuminationsmusterbilder, vorzugsweise aller Illuminationsmusterbilder, zu einem Gesamtilluminationsmusterbild

- Subtrahieren des Gesamtreflexionsbildes von dem Gesamtilluminationsmusterbild zu einem Gesamtbild;
- geeignetes Normieren des Gesamtbildes.

Dabei entspricht das Ergebnis des Normierens des Gesamtbildes dem reflexionskorrigierten Bild des Objektes.

Ein Gesamtilluminationsmusterbild im Sinne der Erfindung kann dabei ein Bild sein, bei welchem alle entsprechenden Illuminationsmusterbilder zu einem gesamten Bild zusammengefügt werden. Somit werden in einem Bild die Informationen des Objektes aus allen Ausleuchtungsrichtungen dargestellt. Somit können in diesem Bild alle Informationen inklusive aller Reflexe enthalten sein, welche durch die winkelselektiven Aufnahmen entstanden sind.

Diese Ausgestaltung weist den Vorteil auf, dass dadurch ein Bild entsteht aus welchem auf einfache und effiziente Weise alle durch die winkelselektive Beleuchtung entstandenen Reflexe herausgefiltert werden können.

Entsprechend einer weiteren exemplarischen Ausgestaltung weist für das Reflexionskorrekturverfahren das Objekt auf, dass es ein diffus reflektierendes Objekt ist.

Diese Ausgestaltung weist den Vorteil auf, dass das Verfahren auf Objekte anwendbar ist, welche keine expliziten Vorzugsrichtungen für die Reflexion aufweisen.

Die Erfindung erlaubt es somit ein Verfahren und zugehörige Vorrichtungen bereitzustellen, wodurch es ermöglicht wird, eine optimale Ausleuchtung eines Objektes zum optischen Erfassen des Objektes zur Verfügung zu stellen, und das Objekt dabei weitestgehend ohne durch die Beleuchtung entstehende Reflexe optisch darzustellen.

Das reflexkorrigierte Bild errechnet sich nun wie folgt:

$$Image = \frac{\sum_{i=1}^{n} I_i - \dfrac{\sum_{j \in N(i)} |I_i - I_j|}{m}}{n}$$

Wobei N(i) die Menge der zu i direkt benachbarten Beleuchtungsrichtungen sind und m die Anzahl aller Nachbarbeleuchtungsrichtungen N(i) angibt.

In einigen Beleuchtungseinstellungen müssen mehrere mögliche Nachbarbeleuchtungsrichtungen einer einzelnen Beleuchtung betrachtet werden. Im Fall einer Matrix von Illuminationsquellen kann das Konzept der Pixel Konnektivität eine geeignete Nachbarschaftsdefinition liefern. Aber auch allgemeinere Nachbarschaften sind möglich. Folglich werden die Indizes der Nachbarn einer Illuminationsrichtung i mit N(i) bezeichnet.

Mit #N(i) ist die Anzahl der Nachbarn der Richtung i angegeben. Darüber hinaus wird mit #(N(j)=i) die Zahl Null bezeichnet, falls die Beleuchtungsrichtung i keine Nachbarbeleuchtungsrichtung von Beleuchtungsrichtung j ist, andernfalls bezeichnet #(N(j)=i) die Zahl Eins.

Somit ist zum Beispiel ist die Summe über i: #(N(i)=j) genau gleich der Anzahl derjenigen Richtungen, in denen j ein Nachbar ist.

Daraus folgend wird die Formel für die Reflexkorrektur folgendermaßen verallgemeinert:

$$Image = \frac{\sum_{i=1}^{M} \left( \#N(i) + \sum_{j=1}^{M} \#\{N(j) = i\} \right) \times I_i - \sum_{i=1}^{M} \sum_{j \in N(i)} |I_i - I_j|}{\sum_{i=1}^{M} \left( \#N(i) + \sum_{j=1}^{M} \#\{N(j) = i\} \right)}$$

Der Fachmann kann einen Nachbarschafts-Satz N(i) für jede Illuminationsrichtung i angeben.

Alternativ können im Übrigen die Reflexe reduziert werden (nicht entfernt werden), indem eine Bildmittelung durchführt wird:

$$Image = \frac{\sum_{i=1}^{n} I_i}{n}$$

Des Weiteren muss es sich bei der Nachbarschaft nicht notwendigerweise um eine direkte Nachbarschaft handeln, beziehungsweise sie muss nicht für alle Einzelrichtungen vollständig und im Allgemeinen auch nicht symmetrisch sein. Dann muss allerdings die Zahl m für jedes i angepasst werden.

Die Erfindung wird nachfolgend eingehender an Hand der Figuren erläutert werden. In diesen zeigen:

Fig. 1    eine schematische Darstellung eines vorgeschlagenen Verfahrens gemäß einer beispielhaften Ausgestaltung der Erfindung;

Fig. 2    eine schematische Darstellung einiger beispielhafter Illuminationsmuster für eine kreisförmige geometrische Grundstruktur für ein vorgeschlagenes Verfahrens gemäß einer weiteren beispielhaften Ausgestaltung der Erfindung;

Fig. 3    eine schematische Darstellung eines vorgeschlagenen Verfahrens gemäß einer weiteren beispielhaften Ausgestaltung der Erfindung;

Fig. 4    eine schematische Darstellung eines vorgeschlagenen Verfahrens gemäß einer weiteren beispielhaften Ausgestaltung der Erfindung; und

Fig. 5    eine schematische Darstellung einer vorgeschlagenen Vorrichtung gemäß einer weiteren beispielhaften Ausgestaltung der Erfindung.

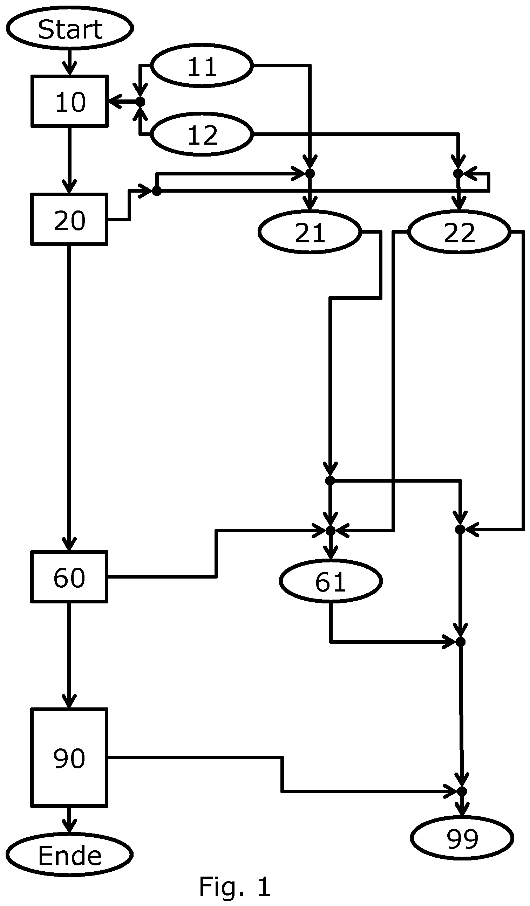

Fig. 1 zeigt eine schematische Darstellung eines vorgeschlagenen Verfahrens gemäß einer beispielhaften Ausgestaltung der Erfindung.

Dabei zeigt Fig. 1 eine schematische Darstellung eines Reflexionskorrekturverfahrens zur Korrektur von Abbildungen, vorzugsweise von mikroskopischen Abbildungen. Dabei weist das Reflexionskorrekturverfahren auf: Illuminieren 10 eines Objektes, wobei das Illuminieren 10 des Objektes mindestens zwei Illuminationsmuster 11, 12 aufweist. Erstellen 20 eines Illuminationsmusterbildes 21, 22 des Objektes für jedes Illuminationsmuster 11, 12. Bestimmen 60 einer Anzahl an Teilreflexionsbildern 61, jeweils mittels einer geeigneten Kombination entsprechender zweier Illuminationsmusterbilder 21, 22. Konstruieren 90 eines reflexionskorrigierten Bildes 99 des Objektes mittels geeigneter Kombination mindestens eines Teiles aller Illuminationsmusterbilder 21, 22 und mindestens eines Teiles aller Teilreflexionsbilder 61. Und dabei weist jedes Illuminationsmuster 11, 12 mindestens eine aktive Illuminationsquelle 111 auf, und jedes Illuminationsmuster 11, 12 ist voneinander verschieden.

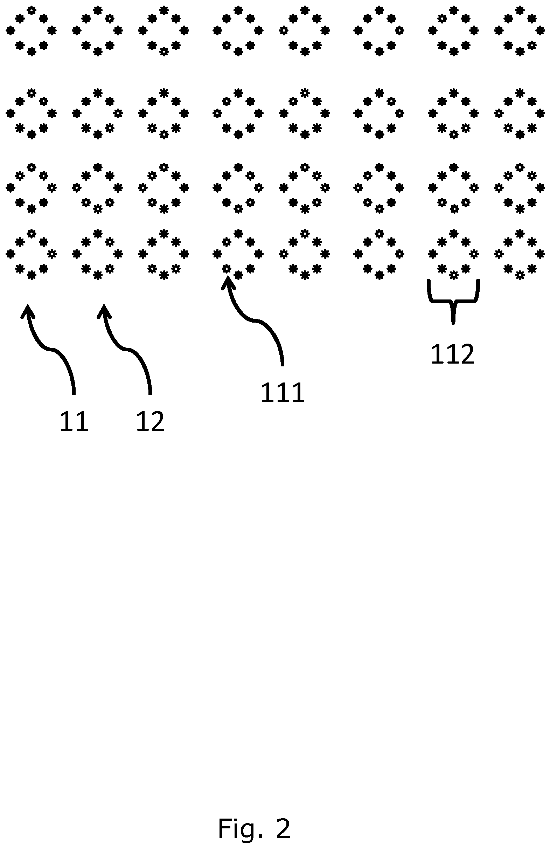

Fig. 2 zeigt schematische Darstellung einiger beispielhafter Illuminationsmuster für eine kreisförmige geometrische Grundstruktur für ein vorgeschlagenes Verfahrens gemäß einer weiteren beispielhaften Ausgestaltung der Erfindung.

Dabei zeigt Fig. 2, vier Reihen von unterschiedlichen Illuminationsmustern. Dabei bilden für jede Reihe die aktiven Illuminationsquellen 111 aller Illuminationsmuster 11, 12 eine geometrische Grundstruktur 112 um das Objekt. Die Illuminationsmuster 11, 12 weisen ein Muster auf, wobei das Muster auswählbar aus einer Mustergruppe ist, wobei die Mustergruppe aufweist: Eine einzige aktive Illuminationsquelle 111, wie beispielhaft in Reihe eins dargestellt. Mehrere aktive Illuminationsquellen 111 in Form eines Achtels der geometrischen Grundstruktur 112. Da in dem Beispiel der Fig. 2 die geometrische Figur acht Illuminationsquellen 111 aufweist, entspricht die Reihe eins ebenfalls diesem Muster. Mehrere aktive Illuminationsquellen 111 in Form eines Viertels der geometrischen Grundstruktur 112, wie beispielhaft in Reihe zwei dargestellt. Mehrere aktive Illuminationsquellen 111 in Form einer Hälfte der geometrischen Grundstruktur 112, wie beispielhaft in Reihe drei dargestellt. Und jede zweite Illuminationsquelle 111 der geometrischen Grundstruktur 112 als aktive Illuminationsquelle 111, wie beispielhaft in Reihe vier dargestellt.

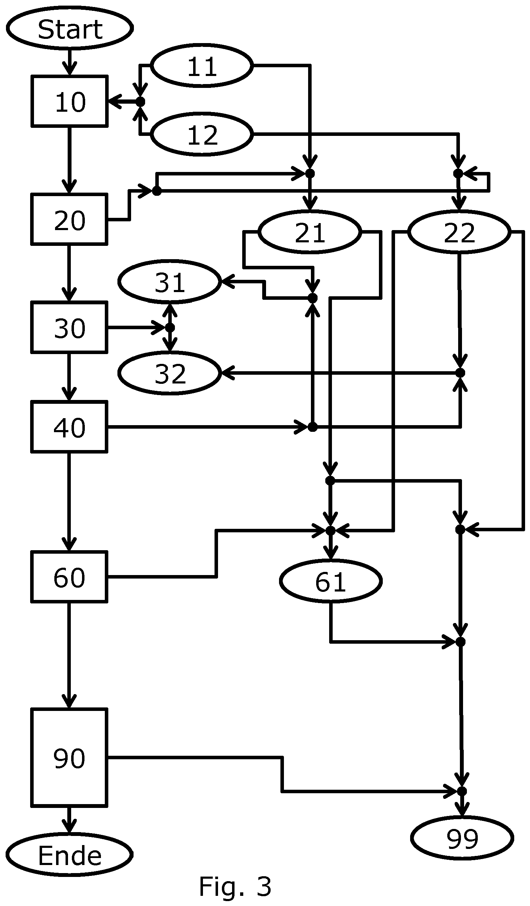

Fig. 3 zeigt eine schematische Darstellung eines vorgeschlagenen Verfahrens gemäß einer weiteren beispielhaften Ausgestaltung der Erfindung.

Dabei zeigt Fig. 3 eine schematische Darstellung eines gegenüber des Verfahrens aus Fig. 1 erweiterten Verfahrens. Das zuvor zu Fig. 1 Gesagte gilt entsprechend für Fig. 3 fort. Wie Fig. 3 entnommen werden kann, weist das Reflexionskorrekturverfahren ferner auf: Bilden 30 einer geeigneten ersten Illuminationsgruppe 31 und einer geeigneten weiteren Illuminationsgruppe 32. Zuordnen 40 eines jeden Illuminationsmusterbildes 21, 22 zu der ersten Illuminationsgruppe 31 oder zu der weiteren Illuminationsgruppe 32. Und dabei gehören die jeweils zwei Illuminationsmusterbilder 21, 22 zur Bestimmung 60 des entsprechenden Teilreflexionsbildes 61 verschiedenen Illuminationsgruppen 31, 32 an.

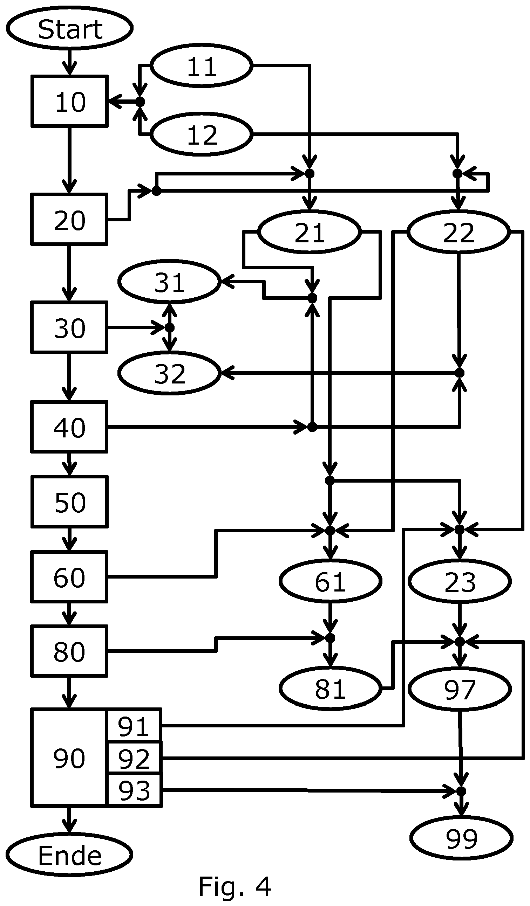

Fig. 4 zeigt eine schematische Darstellung eines vorgeschlagenen Verfahrens gemäß einer weiteren beispielhaften Ausgestaltung der Erfindung.

Dabei zeigt Fig. 4 eine schematische Darstellung eines gegenüber des Verfahrens aus Fig. 1 und Fig. 3 erweiterten Verfahrens. Das zuvor zu Fig. 1 und Fig. 3 Gesagte gilt entsprechend für Fig. 4 fort.

Wie Fig. 4 entnommen werden kann, weist das Reflexionskorrekturverfahren darüber hinaus bestimmen 50 eines geeigneten Nachbarschaftsverhältnisses der Illuminationsmusterbilder 21, 22 zueinander auf. Dabei erfolgt das Bilden 30 der ersten Illuminationsgruppe 31 und der weiteren Illuminationsgruppe 32 mittels des Nachbarschaftsverhältnisses. Und das Zuordnen des jeweiligen Illuminationsmusterbildes 21, 22 zu der ersten Illuminationsgruppe 31 oder zu der weiteren Illuminationsgruppe 32 erfolgt aufgrund des Nachbarschaftsverhältnisses.

Ferner erfolgt das Bestimmen 50 des Nachbarschaftsverhältnisses in Abhängigkeit des ausgewählten Musters.

Darüber hinaus weist das Reflexionskorrekturverfahren ferner ermitteln 80 eines Gesamtreflexionsbildes 81 aus zumindest einem Teil der Teilreflexionsbilder 61 auf.

**EP 3 089 106 B1**

Dabei erfolgt das Ermitteln 80 des Gesamtreflexionsbildes 81 mittels geeigneter Überlagerung der entsprechenden Teilreflexionsbilder 61 miteinander, besonders bevorzugt mittels Summation der entsprechenden Teilreflexionsbilder 61. Ferner weist das Konstruieren 90 des reflexionskorrigierten Bildes 99 des Objektes für das Reflexionskorrekturverfahren auf: Aufsummieren 91 mindestens eines Teiles aller Illuminationsmusterbilder 21, 22, vorzugsweise aller Illuminationsmusterbilder 21, 22, zu einem
Gesamtilluminationsmusterbild 23. Subtrahieren 92 des Gesamtreflexionsbildes 81 von dem Gesamtilluminationsmusterbild 23 zu einem Gesamtbild 97. Und geeignetes normieren 93 des Gesamtbildes 97. Dabei entspricht das Ergebnis des Normierens 93 des Gesamtbildes 97 dem reflexionskorrigierten Bildes 99 des Objektes.

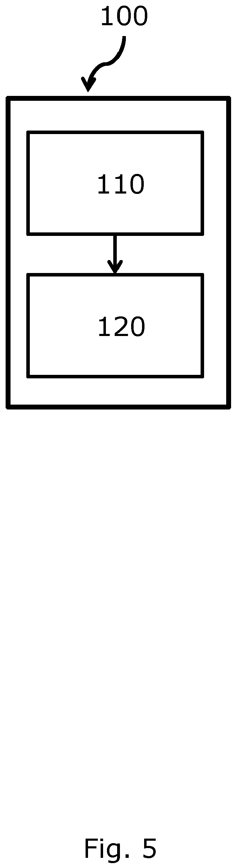

Fig. 5 zeigt eine schematische Darstellung einer vorgeschlagenen Vorrichtung gemäß einer weiteren beispielhaften Ausgestaltung der Erfindung.
Dabei zeigt Fig. 5 eine schematische Darstellung einer reflexionskorrigierenden Vorrichtung 100 zur reflexionskorrigierten Objektabbildung, vorzugsweise zum reflexionskorrigierten Mikroskopieren, besonders bevorzugt zum reflexionskorrigierten Lichtmikroskopieren. Die reflexionskorrigierende Vorrichtung 100 weist eine Bildaufnahmevorrichtung 110 und eine Reflexionskorrekturvorrichtung 120 auf. Dabei ist die Bildaufnahmevorrichtung 110 dazu eingerichtet, ein Objekt aufzunehmen bzw. zu erfassen und ein Ergebnis (Bild) an die Reflexionskorrekturvorrichtung 120 zu übermitteln. Und die reflexionskorrigierende Vorrichtung 100 ist ferner dazu eingerichtet, ein erfindungsgemäßes Reflexionskorrekturverfahren auszuführen.

Die Erfindungsidee kann wie folgt zusammengefasst werden. Es werden ein Verfahren und diesbezügliche Vorrichtungen bereitgestellt, wodurch es möglich werden kann, ein Objekt optisch zu erfassen und dabei Reflexionen, welche durch das Beleuchten bei der Aufnahme des Objektes entstehen, zu korrigieren. Das Prinzip dahinter ist, dass Bilder benachbarter Beleuchtungsrichtungen immer ähnliche Bilder des Objekts zeigen, wobei die Reflexe in der Regel stark beleuchtungsrichtungsabhängig sind. Dadurch bleiben bei der Differenzbildung der aufgenommenen Bilder die Reflexe übrig. Durch die Betragsbildung, die Summe und die Normierung werden anschließend die Reflexe so normiert, das sie von einer Summe der Einzelbilder direkt abgezogen werden können. Das Ergebnisbild enthält anschließend weitestgehend keine direkten Reflexe mehr.
Da diese Methode unparametrisch ist, entstehen auch keine unnatürlichen Artefakte, wie sie in aktuellen praktischen Ausführungen auftreten können. Des Weiteren werden die beleuchtungsrichtungsabhängigen Reflexe entfernt, unabhängig davon, welche Intensität sie aufweisen.

Bezugszeichenliste

10 Illuminieren des Objektes
11, 12 Illuminationsmuster
20 Erstellen eines Illuminationsmusterbildes
21, 22 Illuminationsmusterbild
23 Gesamtilluminationsmusterbild
30 Bilden einer ersten und zweiten Illuminationsgruppe
31 erste Illuminationsgruppe
32 zweite Illuminationsgruppe
40 zuordnen eines jeden Illuminationsmusterbildes zu einer Illuminationsgruppe
50 Bestimmen eines Nachbarschaftsverhältnisses der Illuminationsmusterbilder zueinander
60 Berechnen mindestens eines Teilreflexionsbildes
61 Teilreflexionsbild
80 Ermitteln eines Gesamtreflexionsbildes
81 Gesamtreflexionsbild
90 Berechnen eines reflexionskorrigierten Bildes
91 Aufsummieren mindestens eines Teiles aller Illuminationsmusterbilder zu einem Gesamtilluminationsmusterbild
92 Subtrahieren des Gesamtreflexionsbildes von dem Gesamtilluminationsmusterbild zu einem Gesamtbild
93 Normieren des Gesamtbildes
97 Gesamtbild
99 reflexionskorrigiertes Bild
100 reflexionskorrigierende Vorrichtung
110 Bildaufnahmevorrichtung
111 Illuminationsquelle
112 geometrische Grundstruktur
120 Reflexionskorrekturvorrichtung

**Patentansprüche**

1. Reflexionskorrekturverfahren zur Korrektur von digitalen mikroskopischen Abbildungen, folgende Schritte aufweisend:

   - Illuminieren (10) eines Objektes mit mindestens drei unterschiedlichen Illuminationsmustern (11, 12), wobei jedes Illuminationsmuster (11, 12) mindestens eine aktive Illuminationsquelle (111) aufweist,
   - Erstellen (20) eines Illuminationsmusterbildes (21, 22) des Objektes für jedes Illuminationsmuster (11, 12),
   - Berechnen (60) mindestens eines Teilreflexionsbildes (61), durch Bilden eines Betragsdifferenzbildes zweier benachbarter Illuminationsmusterbilder (21, 22);
   - Ermitteln (80) eines Gesamtreflexionsbildes (81) mittels Summation zumindest eines Teils der Teilreflexionsbilder (61) miteinander;
   - Berechnen (90) eines reflexionskorrigierten Bildes (99) des Objektes durch

      - Aufsummieren (91) aller Illuminationsmusterbilder (21, 22), zu einem Gesamtilluminationsmusterbild (23),
      - Subtrahieren (92) des Gesamtreflexionsbildes (81) von dem Gesamtilluminationsmusterbild (23) zu einem Gesamtbild (97), und
      - Normieren (93) des Gesamtbildes (97), wobei das Ergebnis des Normierens (93) des Gesamtbildes (97) dem reflexionskorrigierten Bild (99) des Objektes entspricht.

2. Reflexionskorrekturverfahren nach Anspruch 1, **dadurch gekennzeichnet, dass** die Illuminationsquellen (111) eine geometrische Grundstruktur (112) um das Objekt bilden, und dass die unterschiedlichen Illuminationsmuster derart gebildet sind, dass jeweils jede zweite Illuminationsquelle (111) der geometrischen Grundstruktur (112) aktiv ist.

3. Reflexionskorrekturverfahren gemäß Anspruch 1 oder 2, wobei die aktiven Illuminationsquellen (111) aller Illuminationsmuster (11, 12) eine geometrische Grundstruktur (112) um das Objekt bilden, und das Illuminationsmuster (11, 12) ein Muster aufweist das auswählbar aus einer der folgenden Mustergruppen ist:

   - eine einzige aktive Illuminationsquelle (111),
   - mehrere aktive Illuminationsquellen (111) in Form eines Achtels der geometrischen Grundstruktur (112),
   - mehrere aktive Illuminationsquellen (111) in Form eines Viertels der geometrischen Grundstruktur (112),
   - mehrere aktive Illuminationsquellen (111) in Form einer Hälfte der geometrischen Grundstruktur (112), und
   - jede zweite Illuminationsquelle (111) der geometrischen Grundstruktur (112) als aktive Illuminationsquelle (111) .

4. Reflexionskorrekturverfahren gemäß einem der Ansprüche 1 bis 3, weiterhin folgende Schritte umfassen:

   - Bilden (30) einer ersten Illuminationsgruppe (31) und einer weiteren Illuminationsgruppe (32),
   - Zuordnen (40) eines jeden Illuminationsmusterbildes (21, 22) zu der ersten Illuminationsgruppe (31) oder zu der weiteren Illuminationsgruppe (32),
   wobei die jeweils zwei Illuminationsmusterbilder (21, 22) zur Bestimmung (60) des entsprechenden Teilreflexionsbildes (61) verschiedenen Illuminationsgruppen (31, 32) angehören.

5. Reflexionskorrekturverfahren gemäß Anspruch 4, wobei die Anzahl an Teilreflexionsbildern (61) der Anzahl an Illuminationsmustern (11, 12) der ersten Illuminationsgruppe (31) und/oder der Anzahl an Illuminationsmustern (11, 12) der weiteren Illuminationsgruppe (32) entspricht.

6. Reflexionskorrekturverfahren gemäß einem der Ansprüche 4 oder 5, ferner aufweisend:

   - Bestimmen (50) eines Nachbarschaftsverhältnisses der Illuminationsmusterbilder (21, 22) zueinander,
   wobei das Bilden (30) der ersten Illuminationsgruppe (31) und der weiteren Illuminationsgruppe (32) mittels des Nachbarschaftsverhältnisses erfolgt, und das Zuordnen des jeweiligen Illuminationsmusterbildes (21, 22) zu der ersten Illuminationsgruppe (31) oder zu der weiteren Illuminationsgruppe (32) aufgrund des Nachbarschaftsverhältnisses erfolgt.

7. Reflexionskorrekturverfahren gemäß Anspruch 6, wobei das Bestimmen (50) des Nachbarschaftsverhältnisses in Abhängigkeit des ausgewählten Musters erfolgt.

8. Reflexionskorrekturverfahren gemäß irgendeinem der vorhergehenden Ansprüche, wobei das Objekt ein diffus reflektierendes Objekt ist.

9. Vorrichtung (100) zur reflexionskorrigierten Objektabbildung, vorzugsweise zum reflexionskorrigierten Mikroskopieren, besonders bevorzugt zum reflexionskorrigierten Lichtmikroskopieren, aufweisend:

   - eine Bildaufnahmevorrichtung (110) und
   - eine Reflexionskorrekturvorrichtung (120),
   wobei die Bildaufnahmevorrichtung (110) dazu eingerichtet ist, ein Objektbild zu erfassen und an die Reflexionskorrekturvorrichtung (120) zu übermitteln, und wobei die reflexionskorrigierende Vorrichtung (100) dazu eingerichtet ist, ein Reflexionskorrekturverfahren gemäß irgendeinem der vorhergehenden Ansprüche auszuführen.

10. Ein Computerprogrammprodukt für eine reflexionskorrigierende Vorrichtung (100) gemäß Anspruch 9, welche nach einem Reflexionskorrekturverfahren gemäß irgendeinem der Ansprüche 1 bis 8 betreibbar ist.

**Claims**

1. Reflection correction method for correcting digital microscopic images, comprising the following steps:

   - illuminating (10) an object with at least three different illumination patterns (11, 12), each illumination pattern (11, 12) having at least one active illumination source (111),
   - creating (20) an illumination pattern image (21, 22) of the object for each illumination pattern (11, 12),
   - calculating (60) at least one partial reflection image (61) by forming an absolute value difference image of two adjacent illumination pattern images (21, 22);
   - ascertaining (80) an overall reflection image (81) by summing at least some of the partial reflection images (61) with one another;
   - calculating (90) a reflection-corrected image (99) of the object by

      - summing (91) all illumination pattern images (21, 22) to form an overall illumination pattern image (23),
      - subtracting (92) the overall reflection image (81) from the overall illumination pattern image (23) to form an overall image (97), and
      - normalizing (93) the overall image (97), wherein the result of the normalization (93) of the overall image (97) corresponds to the reflection-corrected image (99) of the object.

2. Reflection correction method according to Claim 1, **characterized in that** the illumination sources (111) form a geometric basic structure (112) around the object, and **in that** the different illumination patterns are formed in such a way that every second illumination source (111) of the geometric basic structure (112) is active in each case.

3. Reflection correction method according to Claim 1 or 2, wherein the active illumination sources (111) of all illumination patterns (11, 12) form a geometric basic structure (112) around the object and the illumination pattern (11, 12) has a pattern selectable from one of the following pattern groups:

   - a single active illumination source (111),
   - a plurality of active illumination sources (111) in the form of an eighth of the geometric basic structure (112),
   - a plurality of active illumination sources (111) in the form of a quarter of the geometric basic structure (112),
   - a plurality of active illumination sources (111) in the form of half of the geometric basic structure (112), and
   - every second illumination source (111) of the geometric basic structure (112) as active illumination source (111).

4. Reflection correction method according to one of Claims 1 to 3, furthermore comprising the following steps:

   - forming (30) a first illumination group (31) and a further illumination group (32),
   - assigning (40) each illumination pattern image (21, 22) to the first illumination group (31) or to the further illumination group (32),
   wherein the respectively two illumination pattern images (21, 22) for determining (60) the corresponding partial reflection image (61) belong to different illumination groups (31, 32).

5. Reflection correction method according to Claim 4, wherein the number of partial reflection images (61) corresponds to the number of illumination patterns (11, 12) of the first illumination group (31) and/or the number of illumination patterns (11, 12) of the further illumination group (32).

6. Reflection correction method according to either of Claims 4 and 5, furthermore comprising:

- determining (50) an adjacency relationship of the illumination pattern images (21, 22) in relation to one another, wherein the first illumination group (31) and the further illumination group (32) are formed (30) by means of the adjacency relationship and the respective illumination image (21, 22) is assigned to the first illumination group (31) or to the further illumination group (32) on the basis of the adjacency relationship.

7. Reflection correction method according to Claim 6, wherein the adjacency relationship is determined (50) in a manner dependent on the selected pattern.

8. Reflection correction method according to any one of the preceding claims, wherein the object is a diffusely reflecting object.

9. Device (100) for reflection-corrected object imaging, preferably for reflection-corrected microscopy, particularly preferably for reflection-corrected light microscopy, comprising:

- an image-recording device (110) and
- a reflection correction device (120),
wherein the image-recording device (110) is configured to acquire an object image and transfer the latter to the reflection correction device (120), and wherein the reflection-correcting device (100) is configured to carry out a reflection correction method according to any one of the preceding claims.

10. Computer program product for a reflection-correcting device (100) according to Claim 9, which is operable according to a reflection correction method according to any one of Claims 1 to 8.

**Revendications**

1. Procédé de correction de la réflexion pour la correction des images microscopiques numériques, comprenant les étapes suivantes :

- illumination (10) d'un objet avec au moins trois modèles d'illumination (11, 12) différents, chaque modèle d'illumination (11, 12) possédant au moins une source d'illumination (111) active,
- création (20) d'une image de modèle d'illumination (21, 22) de l'objet pour chaque modèle d'illumination (11, 12),
- calcul (60) d'au moins une image de réflexion partielle (61) par formation d'une image de différence de valeur absolue de deux images de modèle d'illumination (21, 22) voisines ;
- détermination (80) d'une image de réflexion totale (81) au moyen de l'addition d'au moins une partie des images de réflexion partielle (61) entre elles ;
- calcul (90) d'une image à réflexion corrigée (99) de l'objet par

- addition (91) de toutes les images de modèle d'illumination (21, 22) en une image de modèle d'illumination totale (23),
- soustraction (92) de l'image de réflexion totale (81) de l'image de modèle d'illumination totale (23) pour obtenir une image totale (97), et
- normalisation (93) de l'image totale (97), le résultat de la normalisation (93) de l'image totale (97) correspondant à l'image à réflexion corrigée (99) de l'objet.

2. Procédé de correction de réflexion selon la revendication 1, **caractérisé en ce que** les sources d'illumination (111) forment autour de l'objet une structure de base (112) géométrique, et **en ce que** les différents modèles d'illumination sont formés de telle sorte qu'une source d'illumination (111) sur deux de la structure de base (112) géométrique est respectivement active.

3. Procédé de correction de réflexion selon la revendication 1 ou 2, les sources d'illumination (111) actives de tous les modèles d'illumination (11, 12) formant autour de l'objet une structure de base (112) géométrique, et le modèle d'illumination (11, 12) possédant un modèle qui peut être sélectionné parmi l'un des groupes de modèles suivants :

- une source d'illumination (111) active unique,
- plusieurs sources d'illumination (111) actives sous la forme d'un huitième de la structure de base (112) géométrique,
- plusieurs sources d'illumination (111) actives sous la forme d'un quart de la structure de base (112) géométrique,
- plusieurs sources d'illumination (111) actives sous la forme d'une moitié de la structure de base (112) géométrique, et
- une source d'illumination (111) sur deux de la structure de base (112) géométrique en tant que source d'illumination (111) active.

4. Procédé de correction de réflexion selon l'une des revendications 1 à 3, comprenant en outre les étapes suivantes :

- formation (30) d'un premier groupe d'illumination (31) et d'un groupe d'illumination supplémentaire (32),
- affectation (40) de chaque image de modèle d'illumination (21, 22) au premier groupe d'illumination (31) ou au groupe d'illumination supplémentaire (32), les deux images de modèle d'illumination (21, 22) respectives destinées à déterminer (60) l'image de réflexion partielle (61) correspondante appartenant à des groupes d'illumination (31, 32) différents.

5. Procédé de correction de réflexion selon la revendication 4, le nombre d'images de réflexion partielle (61) correspondant au nombre de modèles d'illumination (11, 12) du premier groupe d'illumination (31) et/ou au nombre de modèles d'illumination (11, 12) du groupe d'illumination supplémentaire (32).

6. Procédé de correction de réflexion selon l'une des revendications 4 et 5, comprenant en outre :

- la détermination (50) d'un rapport de voisinage des images de modèle d'illumination (21, 22) l'une par rapport à l'autre,
la formation (30) du premier groupe d'illumination (31) et du groupe d'illumination supplémentaire (32) s'effectuant au moyen du rapport de voisinage, et l'affectation de l'image de modèle d'illumination (21, 22) respective au premier groupe d'illumination (31) ou au groupe d'illumination supplémentaire (32) s'effectuant sur la base du rapport de voisinage.

7. Procédé de correction de réflexion selon la revendication 6, la détermination (50) du rapport de voisinage s'effectuant en fonction du modèle sélectionné.

8. Procédé de correction de réflexion selon l'une quelconque des revendications précédentes, l'objet étant un objet à réflexion diffuse.

9. Dispositif (100) de représentation d'objet avec correction de réflexion, de préférence de microscopie avec correction de réflexion, notamment de préférence de microscopie optique avec correction de réflexion, comprenant :

- un dispositif de capture d'images (110) et
- un dispositif de correction de réflexion (120),
le dispositif de capture d'images (110) étant conçu pour capter une image d'objet et la communiquer au dispositif de correction de réflexion (120) et le dispositif (100) corrigeant la réflexion étant conçu pour mettre en œuvre un procédé de correction de réflexion selon l'une quelconque des revendications précédentes.

10. Produit de programme informatique pour un dispositif (100) corrigeant la réflexion selon la revendication 9, lequel peut fonctionner conformément à un procédé de correction de réflexion selon l'une quelconque des revendications 1 à 8.

Fig. 1

Fig. 2

Fig. 3

Fig. 4

100

110

120

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6088612 A

- US 20080084499 A1

**In der Beschreibung aufgeführte Nicht-Patentliteratur**

- **GUPTA VIPIN et al.** Dynamic Illuminationnbased System to Remove the Glare and Improve the Quality of Medical Images. *35th annual International Conference of the IEEE EMBS*